Europäisches Patentamt

European Patent Office

Office européen des brevets

(11) Veröffentlichungsnummer: **0 341 651 B1**

(12) **EUROPÄISCHE PATENTSCHRIFT**

(45) Veröffentlichungstag der Patentschrift: **23.12.92**

(51) Int. Cl.⁵: **G01K 17/02**

(21) Anmeldenummer: **89108303.2**

(22) Anmeldetag: **09.05.89**

(54) **Heizkostenverteiler.**

(30) Priorität: **10.05.88 DE 3815978**

(43) Veröffentlichungstag der Anmeldung:
**15.11.89 Patentblatt 89/46**

(45) Bekanntmachung des Hinweises auf die
Patenterteilung:
**23.12.92 Patentblatt 92/52**

(84) Benannte Vertragsstaaten:
**AT BE CH DE ES FR GB GR IT LI LU NL SE**

(56) Entgegenhaltungen:
**DE-A- 2 300 236**
**DE-A- 2 922 895**
**DE-A- 3 405 382**
**FR-A- 2 323 135**

(73) Patentinhaber: **Stegmeier, Karl**
**Kirchgasse 2**
**W-7101 Flein(DE)**

(72) Erfinder: **Stegmeier, Karl**
**Kirchgasse 2**
**W-7101 Flein(DE)**

(74) Vertreter: **Müller, Hans**
**Patentanwaltskanzlei Müller und Clemens**
**Lerchenstrasse 56**
**W-7100 Heilbronn(DE)**

Rank Xerox (UK) Business Services

**Beschreibung**

Die Erfindung betrifft einen Heizkostenverteiler mit einer wärmeleitenden Rückwand zur wärmeleitenden Befestigung mit einem Heizkörper oder dergleichen und mit einem lösbar mit der Rückwand verbundenen Vorderteil, an dem ein Skalenträger sowie zumindest ein mit Verdampfungsflüssigkeit gefülltes Meßrohr angeordnet ist. Das in dem Vorderteil lösbar angebrachte Meßrohr tritt beim Anbringen des Vorderteils an die Rückwand in Kontakt mit derselben.

Die jeweilige Füllstandshöhe der Verdampfungsflüssigkeit im Meßrohr gibt Aufschluß darüber, welche Wärmemenge jeweils von dem betreffenden Heizkörper abgegeben wurde.

Bei derartigen Heizkostenverteilern sind mehrere Punkte besonders zu beachten. Einerseits wird eine hohe Genauigkeit beim Ablesen des Füllstandes gefordert, da sich die Akzeptanz der Bevölkerung im Hinblick auf Ungenauigkeiten bei der Ablesung infolge steigender Energieträgerpreise stark vermindert hat. Andererseits muß das Auswechseln der Meßrohre schnell und mit geringen Kosten durchgeführt werden können. Hinzu kommt, daß derartige Heizkostenverteiler in hoher Stückzahl in Massenproduktion gefertigt werden und somit keine allzu hohen Forderungen an die einzuhaltenden Fertigungstoleranzen gestellt werden können. Trotzdem muß eine einfache und gegen Manipulationen ausreichend gesicherte Befestigung der Heizkostenverteiler an Heizkörpern gewährleistet sein.

STAND DER TECHNIK

Aus der CH-PS 406 664 ist ein Heizkostenverteiler bekannt, bestehend im wesentlichen aus einem wärmeleitenden Rückteil, einem vor diesem angebrachten abnehmbaren Deckel und einem Meßröhrchen, wobei das Meßröhrchen auf der Innenseite des Deckels derart gehaltert ist, daß es bei Abnahme des Deckels in unverrückbarer Lage an diesem sitzen bleibt, trotzdem aber aus der Halterung leicht herausnehmbar ist. Hierzu sitzt der konvexe untere Abschluß des Meßröhrchens in einem entsprechend der unteren Abschlußfläche des Meßröhrchens ausgebildeten konkaven Bereich eines Schraubenkopfes, wobei das Meßröhrchen durch eine auf seiner Oberseite angreifende Schraubenfeder auf den Schraubenkopf gepreßt wird. Sowohl die Schraubenfeder als auch der an den Schraubenkopf anschließende Schraubenschaft sind im Deckel verankert. Die Vorderseite des Deckels ist im Bereich des Meßröhrchens als durchsichtige Deckscheibe ausgebildet, auf deren Rückseite sich eine Skala befindet. Da sich der Deckel in einfacher Weise vom Rückteil lösen läßt, kann derselbe beim Ablesen in Augenhöhe des Ablesers gehoben werden, wodurch eine gute Ablesegenauigkeit erzielt werden kann.

Im Hinblick auf die Genauigkeit der Erfassung der Wärmemengenmessung ist es erforderlich, daß das Meßröhrchen möglichst auf seiner gesamten Länge am wärmeleitenden Rückteil anliegt. Bei dem Heizkostenverteiler gemäß der CH-PS 406 664 wird versucht, das Meßröhrchen durch den vorderen durchsichtigen Bereich des Deckels an die Rückwand anzupressen. Ist dieser vordere Teil relativ starr (z. B. bei Verwendung von Glas) führt dies dazu, daß bei der Herstellung der Bauteile eine hohe Maßgenauigkeit gefordert werden muß. So ist es möglich, daß bei Überschreiten der Fertigungstoleranzen das Meßröhrchen entweder überhaupt nicht an das Rückteil angepreßt wird oder daß beim Aufsetzen des Deckels auf das Rückteil ene so hohe Kraft auf das Meßröhrchen und die Deckscheibe ausgeübt wird, daß eines dieser beiden Teile zerbricht. Diese Bruchgefahr ließe sich allerdings weitgehend ausschliessen, wenn dieser durchsichtige Bereich des Vorderteils aus nachgiebigem Material gefertigt würde. Da der durchsichtige Bereich jedoch gleichzeitig der Skalenträger ist, würde dadurch eine Verzerrung des Skalenträgers beim Einbau stattfinden. Dies würde zu einer gewissen Verzerrung der Meßskala und damit beim Ablesen zu Differenzen zwischen Verbraucher und Abrechnungsunternehmen führen, da der Verbraucher in der Regel vor Eintreffen des Kontrolleurs den Heizkostenverteiler bei eingebautem Vorderteil abliest, während der Kontrolleur die Ablesung in ausgebautem Zustand des Vorderteils, d. h. bei unverzerrter Skala, vornimmt.

Bei einem aus der DE-PS 28 09 165 bekanntem Heizkostenverteiler ist das Meßröhrchen mit dem Skalenträger am Vorderteil gehalten, und zwar an seiner Unterseite durch ein unteres Federelement, das das Meßröhrchen nach oben gegen einen Anschlag sowie gegen das Rückteil drückt, sowie an seiner Oberseite durch ein oberes Federelement, das das Meßröhrchen ebenfalls gegen das Rückteil drückt. Beide Federelemente sind am Skalenträger gehalten. Bei diesem Heizkostenverteiler ist ein federndes Andrücken des Meßröhrchens an das wärmeleitende Rückteil gewährleistet. Jedoch ergibt sich auch hier der Nachteil, daß sich Unterschiede in der Anordnung des Meßröhrchens in bezug zur Skala ergeben, abhängig davon, ob das Vorderteil eingebaut oder ausgebaut ist. Beim Einbau werden nämlich die Federelemente zusammengedrückt, wodurch sich das Meßröhrchen relativ zur Skala verschiebt. Umgekehrt tritt diese Relativverschiebung bei der Abnahme des Vorderteils auf. Dies führt, wie bereits oben erwähnt, zu Differenzen zwischen der Ablesung des Verbrauchers und der des Kontrolleurs.

Ein weiterer Heizkostenverteiler ist aus FR-A-2 323 135 bekannt.

Es ist bekannt, diese bekannten Heizkostenverteiler an Rippenheizkörpern derart zu befestigen, daß sie an Platten angeschraubt werden, die ihrerseits zwischen jeweils zwei benachbarten Rippen des betreffenden Rippenheizkörpers festgeklemmt sind. Zum erstmaligen Befestigen eines Heizkostenverteilers an einem Plattenheizkörper werden Schrauben mit ihrem Kopf an dem Heizkörper angeschweißt. An diese Schrauben kann dann der Heizkostenverteiler angeschraubt werden, wobei die Schraubverbindung durch eine Plombe gegen Manipulationen gesichert wird. Bei dieser Montagetechnik ist das Vorhandensein eines Schweißgerätes erforderlich. Sofern die Schraubenköpfe an den Heizkörper angeklebt werden würden, könnte zwar auf das aufwendige Schweißen verzichtet werden; da an einer Klebverbindung aber sehr leicht manipuliert werden kann - was zu einer nicht korrekten Wärmeverbrauchsablesung führen würde - konnte sich die sehr kostengünstige Klebetechnik am Markt leider nicht durchsetzen.

DARSTELLUNG DER ERFINDUNG

Der Erfindung liegt die Aufgabe zugrunde, einen Heizkostenverteiler anzugeben, der die aus dem Stand der Technik bekannten Nachteile bei der Ablesung im eingebauten bzw. ausgebauten Zustand seines Vorderteils vermeidet, wobei aber sowohl eine einfache Auswechslung des Meßrohres möglich als auch ein wirtschaftlich einfaches Herstellen des Heizkostenverteilers ohne allzu große Forderungen im Hinblick auf Fertigungstoleranzen möglich sein soll. Auch soll die Erstmontage des Heizkostenverteilers an insbesondere Plattenheizkörper möglichst einfach und trotzdem ausreichend gegen Manipulationen gesichert sein.

Der erfindungsgemäße Heizkostenverteiler ist durch die Merkmale des Anspruchs 1 gegeben. Diese Erfindung zeichnet sich dementsprechend dadurch aus, daß das Meßrohr an dem Skalenträger gehalten ist und zwischen Skalenträger und Vorderteil zumindest ein Federkörper so angeordnet ist, daß durch diesen zumindest einen Federkörper das Meßrohr gegen die Rückwand federnd preßbar ist. Mit dem erfindungsgemäßen Heizkostenverteiler wird damit erreicht, daß die Position von Meßrohr und Skalenträger zueinander sowohl im eingebauten als auch im ausgebauten Zustand des Vorderteiles dieselbe ist. Dies wird dadurch ermöglicht, daß nicht wie im Stand der Technik angegeben das Meßrohr elastisch federnd an das Rückteil angedrückt wird, sondern dadurch, daß im eingebauten Zustand eine Federkraft auf den Skalenträger wirkt, an dem das Meßrohr derart lösbar gehaltert ist, daß bei der Abnahme des Vorderteils keine Verschiebung zwischen dem Skalenträger und dem Meßrohr auftritt. Gleichzeitig wird bei dem erfindungsgemässen Heizkostenverteiler gewährleistet, daß im eingebauten Zustand das Meßrohr mit seiner gesamten Länge schonend gegen die wärmeleitende Rückwand gepreßt wird.

Zu einem konstruktiv einfachen Aufbau kommt man beispielsweise dann, wenn das Vorderteil eine Abdeckkappe aufweist, die sich in einem zumindest teilweisen Bereich mit dem Skalenträger überlappt, wobei in diesem Bereich dann der zumindest eine Federkörper angeordnet ist. In einer bevorzugten Ausgestaltung der Erfindung ist der Federkörper als Federzunge ausgebildet, was sich insbesondere bei der Verwendung von Kunststoff als Skalenträger und/oder Abdeckkappe als vorteilhaft bei der Herstellung des Skalenträgers erweist.

In einer vorteilhaften Ausgestaltung des erfindungsgemäßen Heizkostenverteilers ist die Abdeckkappe als eine Rechteckfläche aus durchsichtigem Material ausgebildet, der Skalenträger ebenfalls rechteckförmig innerhalb der Abdeckkappe angeordnet, mit entsprechenden Öffnungen zum Ablesen des Füllstandes des Meßrohres versehen und in jedem Eckbereich des Skalenträgers eine einstückig mit dem Skalenträger verbundene Federzunge angeordnet.

Um einen derartigen Heizkostenverteiler an einem Plattenheizkörper auf wirtschaftlich einfache und trotzdem gegenüber Manipulationen gesicherte Weise befestigen zu können, wird dieser direkt oder mittels einer Platte, an der der Heizkostenverteiler angeschraubt werden kann, an dem Plattenheizkörper angeklebt. Ferner ist ein stabförmiges Glied vorhanden, das ebenfalls an dem Heizkörper angeklebt wird und das die Platte und die Rückwand des an der Platte befestigten Heizkostenverteilers durchdringt und das an der dem Heizkörper zugewandten Seite und an der Innenseite der Rückwand des Heizkostenverteilers jeweils gehalten wird. Das Glied ist dabei in seinem an dem Plattenheizkörper angeklebten und mit dem Heizkostenverteiler versehenen Zustand von außerhalb des Heizkostenverteilers nicht zugänglich. Das Glied weist eine Sollbruchstelle zwischen diesen seinen beiden Haltepunkten auf, so daß bei Versuchen, den Heizkostenverteiler von dem Plattenheizkörper abzulösen, dieses Glied an der Sollbruchstelle bricht. Das abgebrochene Ende fällt dabei in das Innere des Heizkostenverteilers hinein. Da der Heizkostenverteiler verplombt ist, ist sein Inneres nicht unbemerkt zugänglich, so daß die Manipulation an dem Heizkostenverteiler, d. h. seine Lösung von dem Plattenheizkörper nicht unbemerkt bleiben kann.

Spezielle Ausführungsformen für die Platte, an der der Heizkostenverteiler angeklebt wird, sowie für das Glied, das die Platte und die Rückwand des Heizkostenverteilers durchdringt, sind in den Unteransprüchen 8 bis 13 angegeben sowie dem nachstehenden Ausführungsbeispiel zu entnehmen.

## KURZE BESCHREIBUNG DER ZEICHNUNG

Die Erfindung wird im folgenden anhand des in der Zeichnung dargestellten Ausführungsbeispiels näher beschrieben und erläutert. Es zeigen:

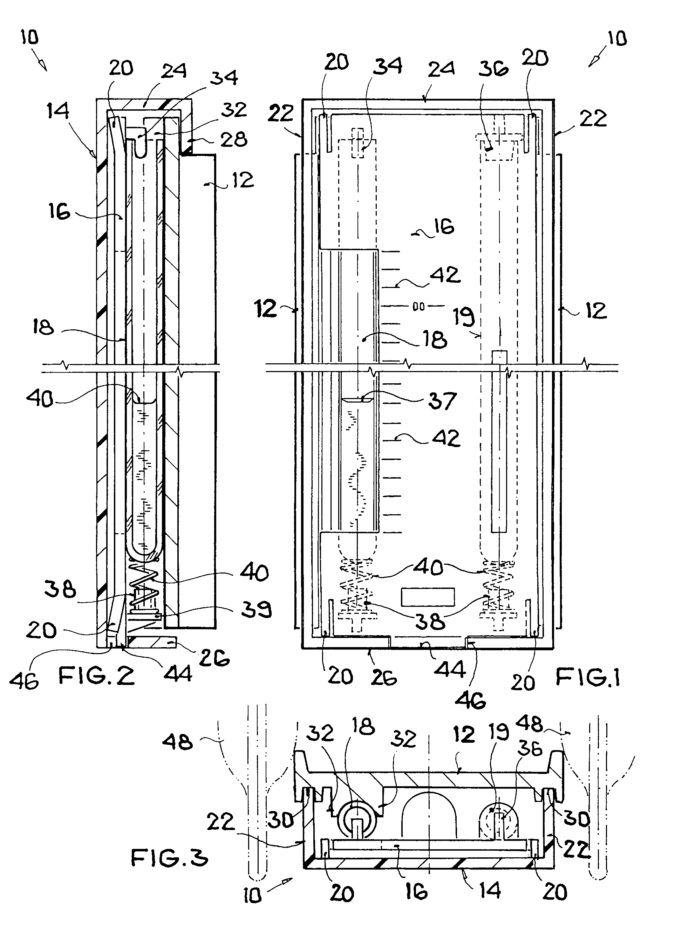

Fig. 1 eine Vorderansicht eines Heizkostenverteilers mit an einem Skalenträger angeordneten Federzungen und Meßröhrchen,

Fig. 2 einen Schnitt durch den Heizkostenverteiler gemäß Fig. 1 entlang der Längsachse eines Meßrohres,

Fig. 3 einen Querschnitt eines Heizkostenverteilers gemäß Fig. 1 und

Fig. 4 eine perspektivische explosionsartige Darstellung der Rückwand des Heizkostenverteilers nach Fig. 1 bis 3 zusammen mit den zur Befestigung an einem Plattenheizkörper vorgesehenen Befestigungsteilen.

## WEGE ZUR AUSFÜHRUNG DER ERFINDUNG

Ein Heizkostenverteiler 10 besitzt eine wärmeleitende Rückwand 12, ein Vorderteil 14 und einen zwischen Rückwand 12 und Vorderteil 14 angeordneten Skalenträger 16, an dem ein erstes Meßrohr 18 und ein zweites Meßrohr 19 gehaltert sind. Das Vorderteil 14 ist aus durchsichtigem Kunststoff hergestellt. Mit seiner rechteckigen Form umfaßt es haubenförmig die Rückwand 12. Rechtwinklig zur Vorderseite des Vorderteils 14 sind auf beiden Seiten Seitenwände 22 angeformt. Ebenfalls rechtwinklig zur Vorderseite des Vorderteils ist auf der Oberseite eine obere Abschlußwand 24 und auf der Unterseite eine untere Abschlußwand 26 angeformt. An die obere Abschlußwand 24 ist rechtwinklig zu ihr nach unten weisend eine hintere Abschlußwand 28 angeformt. Diese hintere Abschlußwand 28 hintergreift die Rückwand 12, die hierzu in diesem Bereich eine Ausnehmung aufweist.

Die Rückwand 12 weist auf beiden Seiten Führungsrillen 30 auf, in die die Seitenwände 22 des Vorderteils 14 eingreifen. Bevorzugt wird die Rückwand als stranggußgepreßtes Aluminiumteil ausgebildet. An der Rückwand 12 sind in ihrem linken Teilbereich zwei auf das Vorderteil 14 weisende Wangen 32 angeformt, wobei der Bereich zwischen den beiden Wangen halbkreisförmig ausgebildet ist, derart, daß sich eine zur Aufnahme des ersten Meßröhrchens 18 geeignete Führungsnut ergibt.

Der zwischen Rückwand 12 und Vorderteil 14 angeordnete Skalenträger 16 ist als rechteckige Kunststoffplatte ausgebildet, wobei die Abmessungen dieser Platte in etwa den Innenabmessungen der rechteckförmigen Vorderseite des Vorderteils 14 entspricht. In den vier Eckbereichen des Skalenträgers 16 ist jeweils eine Federzunge 20 angeordnet, die einstückig mit dem Skalenträger 16 verbunden ist. Dabei wird der Skalenträger 16 so angeordnet, daß die vom Skalenträger 16 abstehenden Federzungen 20 auf die Innenseite der Vorderwand des Vorderteils 14 weisen.

Der Skalenträger 16 ist so ausgestaltet, daß in einem linken Teilbereich das erste Meßrohr 18 und in einem rechten Teilbereich das zweite Meßrohr 19 gehaltert werden kann. Das erste Meßrohr 18 dient zum Ermitteln der in der aktuellen Heizperiode verbrauchten Wärmemenge. Damit die im ersten Meßrohr 18 enthaltene Verdampfungsflüssigkeit verdampfen kann, ist das erste Meßrohr 18 auf seiner Oberseite offen. Zum Arretieren des ersten Meßrohrs an seiner Oberseite ist an dem Skalenträger 16 ein Haken 34 angeformt, der in das erste Meßrohr 18 eingreift und dieses in seiner Lage arretiert. Im zweiten Meßrohr 19 wird der Füllstand der vergangenen Heizperiode festgehalten. Hierzu muß das zweite Meßrohr 19 auf seiner Oberseite verschlossen sein. Dies wird dadurch erreicht, daß der Skalenträger 16 einen an einer Konsole angeordneten konischen Stopfen 36 aufweist, der in den oberen Bereich des zweiten Meßrohrs 19 eingreift.

Das erste Meßrohr 18 und das zweite Meßrohr 19 sind jeweils auf ihrer Unterseite in Röhrchenlängsrichtung federnd gelagert. Dies wird dadurch erreicht, daß an den Skalenträger 16 jeweils im unteren linken Teilbereich und im unteren rechten Teilbereich eine Konsole 39 angeformt ist, wobei an jeder Konsole 39 ein zylindrisches nach oben weisendes Formteil 38 angeformt ist. Über dieses zylindrische Formteil 38 ist eine Spiralfeder 40 gestülpt, die über das zylindrische Formteil hinausragt und einen Sitz für das jeweilige Meßrohr bilden. Die Spiralfeder weist nur einen unwesentlich größeren Durchmesser als das zylindrische Formteil 38 auf, wobei der Durchmesser der Spiralfeder 40 und somit auch der Durchmesser des zylindrischen Formteils 38 vom Durchmesser des ersten bzw. zweiten Meßrohres abhängt, da beide Meßrohre jeweils auf der Spiralfeder 40 in Röhrchenlängsrichtung federnd gelagert sind. Durch die federnde Lagerung der Meßrohre wird gewährleistet, daß das erste Meßrohr 18 in den Haken 34 gepreßt wird und somit sicher arretiert ist, wobei gleichzeitig ein schnelles und einfaches Wechseln des ersten Meßrohres 18 durch Herabdrücken entgegen der Federwirkung und damit durch Lösen der Hakenverbindung möglich ist. Beim zweiten Meßrohr 19 bewirkt die Federkraft, daß es gegen den Stopfen 36 gepreßt wird und somit ein luftdichter Verschluß erzielt wird.

Der Skalenträger 16 weist in seinem linken Teilbereich eine Ausnehmung auf, derart, daß der Flüssigkeitsstand 40 des ersten Meßrohres 18 jederzeit eingesehen werden kann. Die Innenkante der Ausnehmung verläuft parallel zur Innenkante des ersten Meßrohrs 18. Direkt an die Innenkante der Ausnehmung anschließend ist auf dem Skalenträger 16 eine Skala 42 angebracht.

Im rechten Teilbereich weist der Skalenträger eine rechteckförmige Öffnung auf, die zur Füllstandskontrolle des zweiten Meßrohres 19 dient.

Der Skalenträger 16 weist auf seiner Unterseite einen rechteckförmigen, in der Ebene des Skalenträgers 16 liegenden Vorsprung 44 auf, der in eine entsprechende, auf der unteren Abschlußwand 26 angeordnete Öffnung 46 eingreift. Die Größe der Öffnung 46 ist dabei so bemessen, daß der Skalenträger 16 rechtwinklig zu seiner Ebene etwas Spiel hat und somit ein Relativverschieben des Skalenträgers und des Vorderteils 14 ermöglicht wird. Im übrigen sind die Abmessungen des Skalenträgers so gewählt, daß bei abgenommenem Vorderteil 14 das Vorderteil 14 und der Skalenträger 16 eine handhabbare Einheit bilden, d. h., daß sie beim Ausbau nicht in zwei Teile zerfallen.

Im eingebauten Zustand wird das Vorderteil 14 im unteren Bereich über nicht näher dargestellte Öffnungen mittels einer Rastplombe in bekannter Art und Weise verplombt. Im eingebauten Zustand stützt sich der Skalenträger 16 mittels seiner vier Federzungen 20 federnd am Vorderteil 14 ab. Das Vorderteil 14 ist mit der Rückwand 12 über die Plombe und über die hintergreifende hintere Abschlußwand 28 fest verankert. Dadurch wird das erste Meßrohr 18 federnd an die durch die beiden Wangen 32 der Rückwand 12 gebildete halbkreisförmige Führungsnut angepreßt.

Ein derartiger Heizkostenverteiler hat den Vorteil, daß sowohl im eingebauten als auch im ausgebauten Zustand des Vorderteils 14 die Position des ersten Meßrohres 18 in bezug zur Skala 40 unverändert bleibt. Dadurch liegen beim Ablesen sowohl am Heizkörper selbst als auch bei abgenommenem Vorderteil 14 im Hinblick auf das Ablesen dieselben geometrischen Verhältnisse vor, womit Differenzen vermieden werden, die sich häufig dadurch ergeben, daß der Verbraucher seine Ablesung bei eingebautem Vorderteil, der Kontrolleur der Abrechnungsfirma die Ablesung dagegen bei ausgebautem Vorderteil vornimmt.

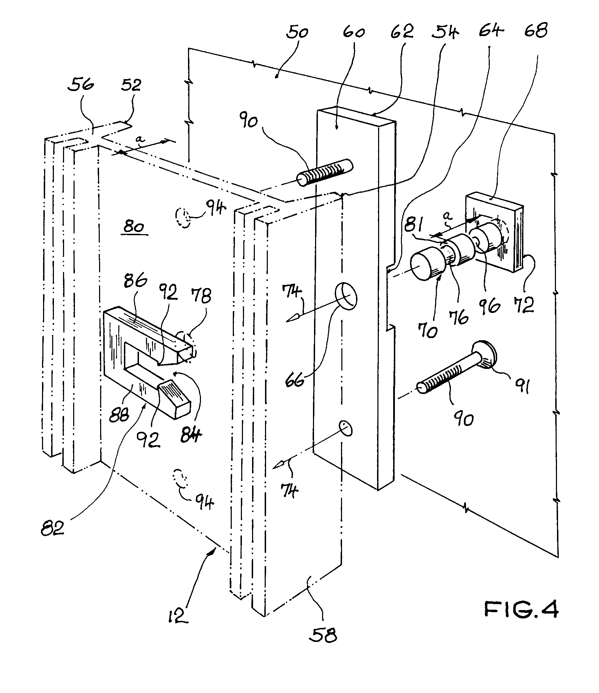

In Fig. 3 ist eine Möglichkeit dargestellt, den Heizkostenverteiler 10 zwischen den Heizrippen 48 eines Heizkörpers anzuordnen. Die Anordnung des Heizkostenverteilers 10 muß in jedem Fall derart gestaltet sein, daß ein guter Kontakt zwischen wärmeleitender Rückwand 12 und den Heizrippen 48 des Heizkörpers gewährleistet ist. Der Heizkostenverteiler 10 wird in üblicher Weise mittels Schrauben und Spannelementen zwischen den Heizrippen 48 verspannt. Diese bekannten Schraub- und Spannelemente sind in Fig. 3 nicht dargestellt.

In einer weiteren Ausgestaltung der Erfindung ist der Bereich zwischen den beiden Wangen zum Bilden der Führungsnut für das Meßröhrchen nicht halbkreisförmig, sondern polygonartig ausgeführt. Eine Alternative zur Ausbildung der federnden Lagerung der Meßrohre besteht darin, die Meßrohre auf ihrer Unterseite auf einer Federzunge zu lagern, die direkt an dem Skalenträger angeformt sind.

In Fig. 4 ist die Rückwand 12 des vorstehend dargestellten Heizkostenverteilers 10 dargestellt. Diese Rückwand 12 ist zur Befestigung an einem Plattenheizkörper 50 vorgesehen.

Im eingebauten Zustand liegt die Rückwand 12 mit ihren beiden Stirnseiten 52, 54 unmittelbar an der Oberfläche des Plattenheizkörpers 50 an. Im Bereich zwischen den beiden Stirnseiten 52, 54, d. h. im Bereich zwischen den beiden zugehörigen Flanschen 56, 58 der Rückwand 12, ist eine Kunststoffleiste 60 vorhanden, deren Rückseite 62 mit einer Klebschicht versehen ist. Mittels dieser Klebschicht kann die Leiste 60 an dem Plattenheizkörper 50 derart fest angeklebt werden, daß ein an der Leiste 60 befestigter Heizkostenverteiler 10 dadurch auch an dem Plattenheizkörper 50 befestigt werden kann.

Die Leiste 60 besitzt in ihrem mittleren Bereich eine Vertiefung 64 mit einem Querloch 66.

Der Querschnitt des Loches 66 ist derart, daß ein Stab 70 durch das Loch 60 hindurchgeführt werden kann. Dieser Stab 70 besitzt an seinem rückwärtigen Ende eine Kopfplatte 68, die so geformt ist, daß sie in der Vertiefung 64 vollständig versenkt vorhanden ist. Sofern der Stab 70 voll durch das Loch 66 in Pfeilrichtung 74 durch die Leiste 60 hindurchgeführt ist, ist die Rückseite 72 der Kopfplatte 68 bündig mit der Rückseite 62 der Leiste 60. Auch die Rückseite 72 ist mit einer Klebschicht versehen, so daß auch die Kopfplatte 68 ebenso wie die Leiste 60 an dem Plattenheizkörper 50 fest angeklebt werden kann.

In dem Stab 70 ist eine - in der Darstellung lediglich eine einzelne - Ringnut 76 eingeformt. Mehrere dieser Ringnute 76 können an dem Stab 70, in Pfeilrichtung 74 voneinander beabstandet, vorhanden sein. Im zusammengebauten Zustand sind die Kopfplatte 68 und die Leiste 60 an dem Plattenheizkörper 50 angeklebt. Die Kopfplatte 68 ist dabei vollständig in der Vertiefung 64 versenkt vorhanden. Der Stab 70 greift dabei durch das Loch 66 der Leiste 60 und außerdem durch ein Loch 78 in der Rückwand 12 hindurch. Die Rückwand 12 liegt dabei mit ihren Stirnseiten 52, 54 vollflächig an dem Plattenheizkörper 50 an. In diesem Zustand ist die Ringnut 76 des Stabes 70 mit ihrer hinteren Nutwand 81 genau in Flucht mit der Innenseite 80 der Rückwand 12. Diese Ringnut 76 schaut dann voll durch das Loch 78 hindurch.

Über diese Ringnut 76 wird dann eine Klemme 82 quer drübergeschoben. Der Schlitz 84 der Klemme 82 ist dabei so groß, daß die Klemme nicht in Längsrichtung von der Ringnut 76 abrutschen kann. Damit die Klemme 82 auch nicht in Querrichtung unabsichtlich von der Ringnut 76 abfallen kann, sind im vorderen Bereich des Schlitzes 84 jeweils an den beiden Kragarmen 86, 88 ein Vorsprung 92 angeformt, die beide nach innen aufeinander zugerichtet sind. Da die beiden Kragarme 86, 88 sich elastisch auseinanderdrücken lassen, kann die Klemme 82 über die Ringnut 76 hinweggeschoben werden; ein unbeabsichtigtes Zurückgleiten der Klemme 82 ist durch das Vorhandensein der beiden Vorsprünge 92 aber ausgeschlossen.

Gehalten wird die Rückwand 12 an der Leiste 60 mittels - im dargestellten Beispielsfall - zweier Schrauben 90, die von der Rückseite der Leiste 60 her die Leiste 60 ebenfalls in Pfeilrichtung 74 durchgreifen und durch in der Rückwand 12 entsprechend angeordnete Löcher 94 hindurchragen. Mittels nicht näher dargestellter Muttern kann die Rückwand 12 dann an diesen Schrauben 90 angeschraubt und damit fest an der Leiste 60 befestigt werden. Die Köpfe 91 der Schrauben 90 sind dabei voll in der Leiste 60 versenkt vorhanden. Statt der Schrauben 90 könnten auch einstückig mit der Leiste 60 verbundene Schraubkragteile verwendet werden.

Um in Pfeilrichtung 74 einen spielfreien Sitz des Stabes 70 zu gewährleisten, entspricht der Abstand a zwischen der Nutwand 81 und der Kopflatte 68 dem Abstand a zwischen der Innenseite 80 und den Stirnseiten 52, 54 der Rückenwand 12.

Die Klemme 82 dient damit nicht zum Befestigen der Rückwand 12 an der Leiste 60, sondern nur zum unverrückbaren Halten des Stabes 70 an der Rückwand 12. Sollte durch mechanisches Einwirken versucht werden, die Rückwand 12 von dem Plattenheizkörper 50 zu lösen, müßte die Rückwand 12 von dem Plattenheizkörper 50 wegbewegt werden. Diese Wegverschiebung würde aber zu einem Zerreißen des Stabes 70 führen. Der Stab 70 besitzt zu diesem Zweck eine relativ stark eingeformte Ringnut 96, die zwischen der Kopfplatte 68 und der vorderen Ringnut 76 vorhanden ist. Diese Ringnut 96 wirkt dann als Sollbruchstelle.

Bei einem Versuch, die Rückwand 12 von dem Plattenheizkörper 50 abzuhebeln, würde der Stab 70 im Bereich der Ringnut 96 brechen. Das von der Kopfplatte 68 entfernte Ende des Stabes 70 würde dann zusammen mit der Klemme 82 im Inneren des Heizkostenverteilers verbleiben. Da der Heizkostenverteiler verplombt ist, könnten dieses Restteil des Stabes 70 und die Klemme 82 nicht unbemerkt entfernt werden. Manipulationen zum Zwecke des Lösens des Heizkostenverteilers von dem Plattenheizkörper 50 könnten daher nicht unbemerkt bleiben.

Statt des Stabes 70 mit seiner zumindest einen Ringnut 76 könnte auch ein mit einem Schraubengewinde versehener "Stab" verwendet werden, auf den dann beispielsweise anstatt der Klemme 82 eine Mutter aufgeschraubt werden könnte.

Wichtig für die sichere Befestigung eines Heizkostenverteilers an einem Plattenheizkörper ist das Vorhandensein des als Plombe wirkenden Stabes 70 mit seiner versenkt vorhandenen Kopfplatte 68. So könnte bei einem Heizkostenverteiler mit ebener Rückwand - der keine den Flanschen 56, 58 entsprechende Ausbildung aufweist - auf die Platte 60 verzichtet werden und die Kopfplatte 68 in eine im Heizkostenverteiler vorzusehende Vertiefung versenkt angeordnet werden. Der Heizkostenverteiler könnte dann auch direkt mit seiner flächigen, ebenen Rückseite seiner Rückwand an dem Plattenheizkörper angeklebt werden.

Im zeichnerisch dargestellten Beispielsfall könnte ebenfalls auf die Platte 60 verzichtet werden und der Heizkostenverteiler über seine Stirnseiten 52, 54 direkt an dem Plattenheizkörper 50 angeklebt werden.

**Patentansprüche**

1. Heizkostenverteiler (10) mit
   - einer wärmeleitenden Rückwand und
   - einem lösbar mit der Rückwand (12) verbundenen Vorderteil (14) mit
     -- einem am Vorderteil gehaltenen Skalenträger (16) und
     -- zumindest einem mit Verdampfungsflüssigkeit gefüllten und zwischen Rückwand (12) und Skalenträger (16) angeordnetem Meßrohr (18), wobei das zumindest eine Meßrohr (18) derart lösbar gehalten ist, daß bei Abnahme des Vorderteils (14) keine Verschiebung zwischen dem Skalenträger (16) und dem Meßrohr (18) auftritt,

   **dadurch gekennzeichnet, daß**
   - das zumindest eine Meßrohr (18) an dem Skalenträger (16) gehalten ist und
   - zwischen Skalenträger (16) und Vorderteil (14) zumindest ein Federkörper (20) so angeordnet ist, daß durch diesen zumindest einen Federkörper (20) das Meßrohr (18) gegen die Rückwand (12) federnd preßbar ist.

2. Heizkostenverteiler (10) nach Anspruch 1, **dadurch gekennzeichnet,** daß das Vorderteil (14) als Abdeckkappe (14) ausgebildet ist, die sich in zumindest einem teilweisen Bereich mit dem Skalenträger (16) überlappt, wobei in diesem Bereich der zumindest eine Federkörper (20) angeordnet ist.

3. Heizkostenverteiler (10) nach Anspruch 1, **dadurch gekennzeichnet,** daß der Federkörper (20) als Federzunge ausgebildet ist.

4. Heizkostenverteiler (10) nach Anspruch 1, **dadurch gekennzeichnet,** daß der Federkörper (20) einstückig mit dem Skalenträger (16) verbunden ist.

5. Heizkostenverteiler (10) nach Anspruch 1, **dadurch gekennzeichnet,** daß der Federkörper (20) einstückig mit dem Vorderteil (14) verbunden ist.

6. Heizkostenverteiler (10) nach Anspruch 3 und 4,
   **dadurch gekennzeichnet,** daß der Skalenträger (16) als Rechteckplatte ausgebildet ist und in jedem Eckbereich des Skalenträgers eine Federzunge (20) angeordnet ist.

7. Heizkostenverteiler (10) nach Anspruch 2, **dadurch gekennzeichnet,** daß das Material für die Abdeckkappe durchsichtig ist.

8. Heizkostenverteiler (10) zum Befestigen an einem Plattenheizkörper (50), nach einem der Ansprüche 1 bis 7,
   wobei der Heizkostenverteiler an dem Plattenheizkörper (50) anklebbar ist,
   **dadurch gekennzeichnet,** daß
   - ein stabförmiges Glied (70) vorhanden ist, das an den Plattenheizkörper (50) anklebbar ist und das die Rückwand (12) des Heizkostenverteilers (10) durchdringt,
   - dieses Glied (70) an der dem Heizkörper (50) zugewandten Seite und an der Innenseite (80) der Rückwand (12) jeweils gehalten (68, 82) ist,
   - dieses Glied (70) eine Sollbruchstelle (96) zwischen diesen seinen beiden Haltepunkten aufweist.
   - dieses Glied (70) in seinem an dem Plattenheizkörper (50) angeklebten und mit einem Heizkostenverteiler (10) versehenen Zustand von außerhalb des Heizkostenverteilers nicht zugänglich ist.

9. Heizkostenverteiler (10) zum Befestigen an einem Plattenheizkörper (50), nach einem der Ansprüche 1 bis 7,
   wobei der Heizkostenverteiler an einer Platte (60) anschraubbar ist, die ihrerseits an dem Plattenheizkörper (50) zu befestigen ist,
**dadurch gekennzeichnet,** daß
- die Platte (60) an dem Plattenheizkörper (50) anklebbar ist,
- ein stabförmiges Glied (70) vorhanden ist, das an dem Plattenheizkörper (50) anklebbar ist und die Platte (60) und die Rückwand (12) des an der Platte (60) befestigten Heizkostenverteilers (10) durchdringt,
- dieses Glied (70) an der dem Heizkörper (50) zugewandten Seite und an der Innenseite (80) der Rückwand (12) jeweils gehalten (68, 82) ist,
- dieses Glied (70) eine Sollbruchstelle (96) zwischen diesen seinen beiden Haltepunkten aufweist.
- dieses Glied (70) in seinem an dem Plattenheizkörper (50) angeklebten und mit einem Heizkostenverteiler (10) versehenen Zustand von außerhalb des Heizkostenverteilers nicht zugänglich ist.

10. Heizkostenverteiler nach Anspruch 9, **dadurch gekennzeichnet,** daß
   - das stabförmige Glied (70) an seinem einen Ende eine Verbreiterung (68) aufweist,
   - diese Verbreiterung (68) scheibenförmig ausgebildet ist,
   - die Platte (60) auf ihrer vom Heizkostenverteiler weggerichteten Seite eine Einformung (64) besitzt,
   - im Bereich der Einformung (64) das Glied (70) eine Aussparung (66) aufweist,
   - durch diese Aussparung (66) das stabförmige Glied (70) hindurchführbar ist,
   - die Einformung (64) querschnittsmäßig der Verbreiterung (68) dieses Gliedes so angepaßt ist, daß die Außenseite (72) der Verbreiterung bündig zur Außenseite (62) der Platte vorhanden ist,
   - an dem stabförmigen Glied (70) zumindest eine Raststelle (76) vorhanden ist,
   - an dieser Raststelle (76) ein Klemmteil (82) auf das Glied aufsteckbar ist, wobei das Klemmteil als Widerlager zur Abstützung des Gliedes an der Innenseite (80) der Rückwand (12) des Heizkostenverteilers wirksam ist.

11. Heizkosteverteiler nach Anspruch 8 oder 10, **dadurch gekennzeichnet,** daß
   - mehrere Raststellen (76) längs des Gliedes (70), im Abstand voneinander, vorhanden sind,
   - jede Raststelle (76) durch eine Einschnürung des Querschnittes des Gliedes gebildet ist,

- das Klemmteil (82) einen Schlitz (84) aufweist, dessen Breite geringfügig größer als die Breite des Querschnitts an der Einschnürung ist.

12. Heizkostenverteiler nach Anspruch 11,
**dadurch gekennzeichnet,** daß am freien Ende des Schlitzes (84) vom Klemmteil (82) der Schlitz eine Verjüngung (92) besitzt, so daß ein auf dem Glied aufgestecktes Klemmteil nicht unbeabsichtigt von dem Glied abfallen oder abrutschen kann.

13. Heizkostenverteiler nach Anspruch 09 oder 10
**dadurch gekennzeichnet,** daß die Platte (60), das Glied (70) und das Klemmteil (82) aus Kunststoff bestehen.

## Claims

1. Heating cost distributor (10) having
   - a heat-conducting rear wall and
   - a front part (14) detachably connected to the rear wall (12), with
     -- a scale carrier (16) held on the front part and
     -- at least one measuring tube (18) filled with evaporation liquid and disposed between the rear wall (12) and the scale carrier (16), the at least one measuring tube (18) being detachably held such that, when the front part (14) is removed, no displacement occurs between the scale carrier (16) and the measuring tube (18),
     characterised in that
   - the at least one measuring tube (18) is held on the scale carrier (16) and
   - between the scale carrier (16) and the front part (14) at least one spring body (20) is disposed such that, by means of said at least one spring body (20), the measuring tube (18) can be resiliently pressed against the rear wall (12).

2. Heating cost distributor (10) according to Claim 1, characterised in that the front part (14) is formed as a cover cap (14) which overlaps the scale carrier (16) in at least one partial region, at least one spring body (20) being disposed in that region.

3. Heating cost distributor (10) according to Claim 1, characterised in that the spring body (20) is in the form of a spring tongue.

4. Heating cost distributor (10) according to Claim 1, characterised in that the spring body (20) is in one piece with the scale carrier (16).

5. Heating cost distributor (10) according to Claim 1, characterised in that the spring body (20) is in one piece with the front part (14).

6. Heating cost distributor (10) according to Claims 3 and 4, characterised in that the scale carrier (16) is in the form of a rectangular plate and a spring tongue (20) is disposed in each corner region of the scale carrier.

7. Heating cost distributor (10) according to Claim 2, characterised in that the material for the cover cap is transparent.

8. Heating cost distributor (10) for fastening to a flat radiator (50), according to one of Claims 1 to 7, the heating cost distributor being capable of being bonded to the flat radiator (50), characterised in that
   - a rod-like member (70) is provided which can be bonded to the flat radiator (50) and which penetrates the rear wall (12) of the heating cost distributor (10),
   - said member (70) is held (68, 82) both at the side facing the radiator (50) and at the inner side (80) of the rear wall (12),
   - said member (70) has a predetermined breaking point (96) between these two holding points,
   - in the state in which it is bonded to the flat radiator (50) and fitted with a heating cost distributor (10), said member (70) is not accessible from outside the heating cost distributor.

9. Heating cost distributor (10) for fastening to a flat radiator (50), according to one of Claims 1 to 7, the heating cost distributor being capable of being screwed to a plate (60) which in turn is to be fastened to the flat radiator (50), characterised in that
   - the plate (60) can be bonded to the flat radiator (50),
   - a rod-like member (70) is provided which can be bonded to the flat radiator (50) and penetrates the plate (60) and the rear wall (12) of the heating cost distributor (10) fastened to the plate (60),
   - said member (70) is held (68, 82) both at the side facing the radiator (50) and at the inner side (80) of the rear wall (12),
   - said member (70) has a predetermined breaking point (96) between these two holding points,
   - in the state in which it is bonded to the flat radiator (50) and fitted with a heating cost distributor (10), said member (70) is not accessible from outside the heating cost distributor.

10. Heating cost distributor according to Claim 9, characterised in that
- the rod-like member (70) has a widened portion (68) at one end,
- said widened portion (68) is in the form of a disc,
- the plate (60) has a recess (64) on its side facing away from the heating cost distributor,
- in the region of the recess (64) the member (70) has a cutout (66),
- the rod-like member (70) can be passed through said cutout (66),
- the recess (64) is adapted in its cross-section to the widened portion (68) of said member such that the outer side (72) of the widened portion lies flush with the outer side (62) of the plate,
- at least one catch point (76) is present on the rod-like member (70),
- a clamp member (82) can fit over the member at this catch point (76), said clamp member acting as an abutment for supporting the member on the inner side (80) of the rear wall (12) of the heating cost distributor.

11. Heating cost distributor according to Claim 8 or 10, characterised in that
- a plurality of catch points (76) are present along the member (70) and are spaced apart,
- each catch point (76) is formed by a constriction of the cross-section of the member,
- the clamp member (82) has a slot (84), the width of which is slightly larger than the width of the cross-section at the constriction.

12. Heating cost distributor according to Claim 11, characterised in that, at the free end of the slot (84) of the clamp part (82), the slot tapers (92), so that a clamp part fitted onto the member cannot unintentionally fall or slip off the member.

13. Heating cost distributor according to Claim 9 or 10, characterised in that the plate (60), the member (70) and the clamp part (82) are made of plastics material.

**Revendications**

1. Calorimètre (10) avec
- une paroi dorsale conductrice de la chaleur, et
- une pièce avant (14) reliée de manière amovible à la paroi dorsale (12) avec
- un porte-échelle (16) maintenu contre la pièce avant, et
- au moins un tube de mesure (18) rempli d'un liquide d'évaporation et disposé entre la paroi dorsale (12) et le porte-échelle (16), au moins un tube de mesure (18) étant maintenu de manière amovible de telle sorte que lors de l'enlèvement de la pièce avant (14) ne se produise aucun déplacement mutuel du tube de mesure (18) et du porte-échelle (16),
caractérisé en ce que
- au moins un du tube de mesure (18) est maintenu contre le porte-échelle (16), et
- entre le porte-échelle (16) et la pièce avant (14) au moins un élément-ressort (20) est disposé de telle sorte que le tube de mesure (18) puisse être repoussé élastiquement contre la paroi dorsale (12) par ce ou ces éléments-ressorts (20).

2. Calorimètre (10) selon la revendication 1, caractérisé en ce que la pièce avant (14) est réalisée sous la forme d'un couvercle de recouvrement (14) qui recouvre au moins partiellement le porte-échelle (16), un ou plusieurs éléments-ressorts (20) étant disposés dans cette zone recouverte.

3. Calorimètre (10) selon la revendication 1, caractérisé en ce que l'élément-ressort (20) est réalisé sous la forme d'une languette de ressort.

4. Calorimètre (10) selon la revendication 1, caractérisé en ce que l'élément-ressort (20) est assemblé pour former une seule pièce avec le porte-échelle (16).

5. Calorimètre (10) selon la revendication 1, caractérisé en ce que l'élément-ressort (20) est assemblé de manière à former une seule pièce avec la pièce avant (14).

6. Calorimètre (10) selon la revendication 3 et la revendication 4, caractérisé en ce que le porte-échelle (16) est réalisé sous la forme d'une plaquette rectangulaire et qu'une languette de ressort (20) est installée au voisinage de chaque coin du porte-échelle.

**7.** Calorimètre (10) selon la revendication 2, caractérisé en ce que le matériau constituant le couvercle de recouvrement est transparent.

**8.** Calorimètre (10) à fixer sur un corps de chauffe à plaques (50), selon l'une des revendications 1 à 7, le calorimètre pouvant être collé sur le corps de chauffe à plaques (50), caractérisé en ce que
il existe un élément (70) en forme de tige pouvant être collé au corps de chauffe à plaques (50) et traversant la paroi dorsale (12) du calorimètre (10),
- cet élément (70) est maintenu d'une part sur la face du corps de chauffe (50) tournée vers lui et d'autre part sur la face intérieure (80) de la paroi dorsale (12),
- cet élément (70) présente un emplacement de future découpe (96) entre ses deux points de fixation,
- cet élément (70), dans sa position collée au corps de chauffe à plaques (50) et lorsqu'il est doté d'un calorimètre (10) n'est pas accessible depuis l'extérieur du calorimètre.

**9.** Calorimètre (10) à fixer à un corps de chauffe à plaques (50) selon l'une des revendications 1 à 7, le calorimètre pouvant être vissé à une plaque (60) qui pour sa part est fixée au corps de chauffe à plaques (50), caractérisé en ce que
- la plaque (60) peut être collée au corps de chauffe à plaques (50),
- il existe un élément (70) en forme de tige qui peut être collé au corps de chauffe à plaque (50) et qui traverse la plaque (60) et la paroi dorsale (12) du calorimètre (10) fixé contre la plaque (60),
- cet élément (70) est maintenu d'une part sur la face du corps de chauffe (50) tournée vers lui et d'autre part sur la face intérieure (80) de la paroi dorsale (12),
- cet élément (70) présente un emplacement de future découpe (96) entre ses deux points de fixation,
- cet élément (70), dans sa position collée au corps de chauffe à plaques (50) et lorsqu'il est doté d'un calorimètre (10) n'est pas accessible depuis l'extérieur du calorimètre.

**10.** Calorimètre selon la revendication 9, caractérisé en ce que
- l'élément (70) en forme de tige présente un élargissement (68) à une de ses extrémités,
- cet élargissement (68) présente la forme d'un disque,
- la plaque (60) possède un creux (64) formé sur sa face tournée du côté opposé au calorimètre,
- l'élément (70) présente une découpe (66) au voisinage du creux (64),
- l'élément (70) en forme de tige peut traverser cette découpe (66),
- le creux (64) possède une section transversale ajustée à l'élargissement (68) de cet élément (70) de telle sorte que la face extérieure (72) de l'élargissement se présente à chant sur la face extérieure (62) de la plaque (60),
- au moins un emplacement d'accrochage (76) existe sur l'élément (70) en forme de tige,
- une pièce de serrage (82) située sur l'élément (70) peut s'emboîter sur cet emplacement d'accrochage (78), la pièce de serrage servant de contre-appui pour l'élément (70), sur la face intérieure (80) de la paroi dorsale (12) du calorimètre.

**11.** Calorimètre selon la revendication 8 ou 10, caractérisé en ce que
- il existe plusieurs emplacements d'accrochage (76) le long de l'élément (70), à intervalle mutuel,
- chaque emplacement d'accrochage (76) est formé par un rétrécissement de la section transversale de l'élément (70),
- la pièce d'accrochage (82) présente une fente (84) dont la largeur est un peu plus grande que la largeur de la section transversale au droit du rétrécissement.

**12.** Calorimètre selon la revendication 11, caractérisé en ce qu'à l'extrémité libre de la fente (84) de la pièce d'accrochage (82), la fente possède un rétrécissement (92), de sorte qu'une pièce de serrage emboîtée sur l'élément (70) ne peut tomber ou glisser involontairement de l'élément (70).

**13.** Calorimètre selon la revendication 9 ou 10, caractérisé en ce que la plaque (60), l'élément (70) et la pièce de serrage (82) sont en matériau synthétique.

FIG.1

FIG.2

FIG.3

EP 0 341 651 B1

FIG.4

12